# EUROPEAN PATENT APPLICATION

(11) **EP 4 721 571 A1**
(43) Date of publication of application: **08.04.2026**
(21) Application number: 25300033.5
(22) Date of filing: 27.03.2025
(51) Int. Cl.: A21D 13/32, A21D 13/38, A23L 19/00, A23L 21/10, A23L 25/10, A23L 25/00

(54) **SWEET SPREAD WITH ADJUSTABLE WATER ACTIVITY (AW)**

(30) Priority: 01.10.2024 GR 20240100671
(71) Applicant: KARAMOLEGOS BAKERY S.A., 19400 Koropi, Attica (GR)
(72) Inventor: Karamolegkos, Ilias Apostolos, GR-15237 Athens (GR); Evangelou, Vasileios, GR-15236 Penteli (GR)
(74) Representative: Lyberis, Nikolaos

(57) **Abstract**

The present invention relates to a sweet spread of adjustable water activity (Aw), suitable for use in sandwich-type products ready for consumption with a shelf life of at least 15-25 days. The spread comprises, among others, a sweetener, water in emulsified form trapped in the sweetener, nut paste and starch, so as to have an Aw of 0.89-0.91, preferably 0.90 +/- 0.03 and a particle size of 20-30µm, preferably 20µm. The invention also relates to a method of preparing the spread, which through pasteurization and mechanical processing of the liquid phases of the ingredients achieves its emulsification and stable mixing with the lipophilic phase, thus adjusting the Aw and giving the produced spread a smooth and cohesive structure with a long shelf life.

## Description

### TECHNICAL FIELD

The present disclosure relates to sweet spreads with adjustable water activity.

### BACKGROUND

Bread has been one of the staple foods of humans in almost all societies and geographical latitudes and longitudes of the earth for approximately 14,000 years, according to archaeological excavation findings.

One of the most widespread uses of bread is for breakfast or as a snack, where it is spread with some sweet (or savory) preparation, which is then referred to as a "spread". Alternatively, the same sweet preparation is used as a filling between two slices of bread or inside a slice of bread folded to form a sandwich. This sweet preparation is then referred to as a "spread".

The spread usually has a watery form, such as fruit jam, etc., or a fatty form, such as a paste of ground nuts, etc. and is spread on any type of bread, with the most commonly used being the fluffy bread of the "toast bread" type. Such breads are known and are manufactured on an industrial scale mainly through the Chorleywood baking method, which ensures the production of fluffy and homogeneous bread, easy to cut into slices. However, the most important advantage of the Chorleywood method is the drastic reduction in the bread preparation time, from fermentation to the maturation of the dough, so that it can now be baked to produce the final bread product, thus reducing the production cost. While the traditional baking process for the production of dough ready for baking takes up to 24 or more hours for sourdough breads, the Chorleywood method reduces the required time to just 3.5 hours. For this reason, the majority of industrial bread production internationally is produced using the Chorleywood method or its variations using a variety of different raw materials.

The Chorleywood method is based on the use of mixing-kneading machines, which, however, operate at higher speeds (100 - 120 rpm) and exert greater forces-pressures on the dough, transmitting energy to it at a rapid rate of up to 8.5 - 11Wh/Kg, so that the dough develops its desired properties in a reduced time compared to the traditional kneading method.

Due to their fluffy texture and other characteristics, Chorleywood-type breads, such as toast bread, are more prone to spoilage when exposed to spreads such as those mentioned earlier.

Despite their popularity and the very large market share held by breads produced using the Chorleywood method, consumers often complain that these breads do not taste like bread and resemble the taste of paper, do not have the texture of bread but of a sponge, and are so fluffy that they quickly become soggy from the moisture of the ingredients that are added to produce toast and sandwiches or are spread on the bread, especially if the final preparation is not consumed immediately after its preparation.

In recent decades, a very large industry of ready-to-eat sandwiches and spreads with sweet ingredients (biscuit type), such as the previously mentioned spreads, has been created. These ready-to-eat sandwich-type products are prepared and intended for storage and consumption within a few hours, with a maximum shelf life of up to three days after their production. However, this storage makes them vulnerable to spoilage, due to the transfer of free water between the spread and the bread, such as for example the soaking of the bread, but also contamination by bacteria, mold, etc., making them potential risks to public health and degrading the quality of the products to the point that they can no longer be sold and consumed.

In particular, in the case of using a fatty spread, such as ground nut paste, this has a very low water activity (Aw), resulting in the bread, which has a high water activity, releasing free water into the spread, which then contributes to the deterioration of the spread and the final product.

To minimize this risk, various techniques are used, which to some extent ensure better preservation of prefabricated products until they are consumed. Among them are preservation in refrigerated conditions (which entails increased costs and limits their availability) or freezing (which alters the taste and texture of the products and makes them unavailable for immediate consumption), sterilization and preservation in modified atmosphere packaging (which increases their shelf life but only by a few days), the addition of preservatives, etc. additives (something that alters the taste and degrades the product while potentially causing Irritable Bowel Syndrome (IBS) and other health problems to consumers), and drying, smoking and adding salt or sugar as a natural preservative (which, however, alter the taste of the product and create health problems such as increased blood pressure and blood sugar, etc.).

### SUMMARY

It is clear that industrially prepared sweet spreads pose many challenges for the industry and present many problems and disadvantages in their use in ready-to-eat breads and pastries.

It is an object of the present invention to present a sweet spread mixture, as well as a method of preparing it, which increases its shelf-life outside refrigeration (at room temperature) when used in bread and pastry products, while ensuring, at the same time, a uniform and improved texture and taste.

### DETAILED DESCRIPTION

### Water Activity (Aw) and Food Shelf Life

Water activity is an index that represents the percentage of free water in food and can be measured from the water vapor pressure (P) in a sealed packaging material containing the food and from pure water at that temperature. It is defined as the ratio of the vapor pressure (P) in the food to the vapor pressure of pure water (PO) at the same temperature as the food, and is obtained from the equation Aw = P / PO.

Aw is the standard index used in the food industry to determine the necessary storage conditions of a food and its shelf life. When we calculate Aw, we are not measuring the amount of water in a food. In reality, we are measuring the "excess" amount of water that is available for use by microorganisms. Each microorganism has a minimum and optimal Aw to multiply and therefore it is important to take this into account in order to control the growth of pathogenic microorganisms, thus preventing food spoilage. At the same time, Aw can be used to control the chemical and physical stability of a food.

**Table 1** presents examples of Aw for common foods.

**Table 1: Examples of Aw for common foods.**

| **FOOD** | **Aw** (at room temperature, about 25°C) | **FOOD TYPE** |
|---|---|---|
| Pure Water | 1,00 | - |
| Wheat Flour | 0,65 | Bread |
| Yeast Bread | 0,983 | Bread |
| Sourdough Bread | 0,981 | Bread |
| Pitta Bread (Flatbread) | 0,88-0,96 | Bread |
| Koppe-style bread (fluffy bun) | 0,72 | Bread |
| Toast Bread | 0,94-0,98 | Bread |
| Breadsticks | 0,36 | Bakery/Bread Product |
| Croissant | 0,76-0,79 | Bakery/Bread Product |
| Cake | 0,81 | Bakery/Bread Product |
| Sweet, Fatty Filling (dry spread, e.g. hazelnut praline type) | 0,25 | Sweet Filling |
| Sweet, Watery Filling (fruit jam type) | 0,80-0,84 | Sweet Filling |
| Confectionery Icing | 0,78 | Sweet Filling |
| Chocolate | 0,3-0,5 | Sweet Filling |
| Nuts | 0,65-0,75 | Sweet/ Savory Filling |
| Peanut butter | 0,33 | Savory Filling |
| Fresh Meat, fish/seafood | 0,99 | Savory Filling |
| Cheese | >0,94 | Savory Filling |
| Salty Cold Cuts (e.g. salami) | 0,82 | Savory Filling |
| Boiled cold cuts (e.g. turkey) | 0,98 | Savory Filling |

**Table 1** shows that while wheat flour has a low Aw (0.65), its use in bread production with the addition of yeast, water and other additives produces bread that has a very high Aw (0.94-0.98). If the bread contains fatty substances (oil, butter, nuts, etc.) then the Aw decreases depending on the percentage of fat added. For this reason, baked goods, which generally contain butter or vegetable fats (e.g. palm oil, etc.) in the industry, have a lower Aw (0.76-0.81) than bread.

For the same reason, fatty substances used as fillings in sandwich-type products (e.g. peanut butter, salty cold cuts, etc.) have a moderate Aw of 0.33-0.82. At the same time, savory fillings with low salt content (e.g. boiled turkey and cheeses) have very high Aw (0.92-0.98).

Ingredients used as sweet fillings in sandwich products and other types of baked goods have extremely low Aw (0.25-0.50) when they have a predominantly fatty content (e.g. hazelnut praline, chocolate, etc.) or moderate Aw (0.65-0.78) when they have a predominantly watery content (e.g. nuts, confectionery glaze, etc.).

**Table 2** presents examples of Aw that allow the growth of different types of microorganisms.

**Table 2: Examples of minimum Aw that allow the growth of different types of microorganisms.**

| **MICROORGANISM** | **MINIMUM Aw FOR REPRODUCTION** |
|---|---|
| Clostridium Botulinum | 0,97 |
| Pseudomonas Fluorescens | 0,97 |
| Escherichia Coli | 0,95 |
| Clostridium Perfringens | 0,95 |
| Salmonella | 0,95 |
| Vibrio Cholerae | 0,95 |
| Clostridium Botulinum A, B | 0,97 |
| Bacillus Cereus | 0,93 |
| Listeria Monocytogenes | 0,92 |
| Bacillus Subtilis | 0,91 |
| Staphylococcus Aureus | 0,87 |
| Mold | 0,70 |
| Do not reproduce | <0,60 |

As shown in **Table 2,** most common types of microorganisms reproduce at Aw greater than 0.95 or 0.91 in some cases. Mold reproduces at Aw equal to or greater than 0.70.

These measurements indicate that foods with very high Aw allow the growth of pathogenic microorganisms, making them unfit for consumption.

Referring to **Table 1,** we can easily see that most raw materials that are commonly used in bread products, pastries and sandwich products can grow mold, while a large portion of them can also grow cultures of pathogenic microorganisms.

For this reason, it is necessary to preserve raw materials and finished products in controlled storage conditions before use/consumption, such as refrigeration or freezing, modified atmosphere, pasteurization, etc., or otherwise reduce their shelf life and/or add natural or artificial preservatives, or a combination of the above.

In general, if a product has an Aw greater than 0.85, then it is required to be refrigerated or to take another protective measure such as one or more of the above to avoid the growth of pathogenic microorganisms and/or mold.

For products with Aw 0.60-0.85, refrigeration or other protective measures against the growth of pathogenic microorganisms and mold are not necessary but optional. However, in this case, the product will have a limited shelf life (e.g. a few days, such as 3-4) due to the presence of yeasts and some types of mold in the atmosphere that mainly thrive due to the aerobic conditions that exist within the product packaging.

For products with Aw less than 0.60, refrigeration or other measures to protect against the growth of pathogenic microorganisms and mold are not necessary. These products have a long shelf life (e.g. weeks or months).

In order to increase the shelf life of food products and, depending on the type of food, to avoid the need for refrigeration, food industries use some of the techniques mentioned above to ensure that their products remain safe for consumption. However, as is known to both industries and consumers, the addition of preservatives (whether natural or artificial), as well as drying and pasteurization, alter the taste, texture, organoleptic characteristics of a food and in many cases its appearance and mechanical properties.

For these reasons, it is desirable to industrially produce food products, such as sweet spreads, which will have a longer shelf life than the corresponding products currently available and at the same time will maintain the flavor, texture, organoleptic characteristics and mechanical properties of the bread (e.g. toast type bread) with which they come into contact, as well as when used in the manufacture of bread and bakery products, will prevent spoilage of the final product in the absence of refrigeration.

### Food Combinations with Different Aw

As already mentioned, water activity is an indicator that represents the percentage of free water in food, i.e. the "excess" amount of water that is available for use by microorganisms.

In the bakery industry, one of the most widespread uses of bread and other bakery products is in the production of sandwich-type products. Such a product typically consists of two slices of bread with a filling, either savory or sweet, inserted between them. In one variation of these products, a single slice of bread may be used on which the filling is placed, while in another variation, the slice of bread with the filling is folded in half to form a sandwich.

According to the content of **Table 1,** breads and pastries have Aw 0.72-0.98 and more specifically toast bread, which is usually used in the preparation of sandwiches, has Aw 0.94-0.98 depending on the raw materials and the method of its preparation. This bread is preferred due to its characteristics, namely its light texture, its taste, its elasticity and its resistance to mechanical stress so that it does not rub and maintains the shape of the sandwich. The bread is filled with a sweet filling (e.g. nut spread or chocolate) with Aw 0.25-0.84.

It is obvious that the Aw of the bread and the Aw of the filling differ, and to a large extent. It is therefore obvious that since Aw represents the percentage of free water in foods, excess water from foods with a high Aw will move to foods with a lower Aw. Given enough time, the movement of water will continue until equilibrium is reached in the Aw of the bread and the filling.

In the hypothetical case where the Aw of the bread and the sweet spread are the same or similar (as would be the case, for example, if brie cheese were added to toasted bread), no water would move from the bread to the sweet spread, or any movement would involve an amount such that it would not affect the characteristics of the product, thus maintaining the original quality of the bread and the filling. In other words, the bread would not dehydrate and the sweet spread would not acquire moisture on its surface, resulting in the absence of the growth of mold and other microorganisms.

Thus, the consumer would not perceive the product, either as potentially dangerous to his health, or as of inferior taste or texture, as a result of which he would not reject it from future purchases, while the seller would not reject it as unsuitable before selling it. This problem concerns products that are prepared for the purpose of being stored as ready-to-eat and which, depending on their preparation method, can be kept in a ready-to-eat form on the shelf (with or without refrigeration).

### Sweet Spread

The present invention relates to a sweet spread, which increases its shelf life (at room temperature) to at least 15-25 days, reduces the time and cost of its preparation, ensures a uniform structure-texture, improved organoleptic characteristics, texture and taste, and is suitable for use in ready-to-eat bread and bakery products, suitable for storage outside refrigeration.

The present innovative technical solution aims to solve the problems of the industry mentioned above. The present sweet spread includes chocolate and nuts, which provide the final product with superior organoleptic characteristics, improved texture and chocolate flavor, accompanied by a nutty flavor and a combination of the organoleptic characteristics of these two raw materials. It also contains excess water as a raw material, which allows the Aw of the sweet spread to be adjusted to 0.89-0.91 (preferably 0.90 +/- 0.03) so that it approaches or even equals the Aw of the selected bread with which it will come into contact (e.g. toast bread or another type of bread, both with a modified Aw equal to 0.905-0.925).

### Sweet Spread Mix (Mixture) Ingredients

The spread consists of the following essential raw materials: water (approximately 20%-30% by weight -wt. - in the spread), sweetener, milk and hazelnut paste. Milk is an optional ingredient.

Optionally, one or more of the following ingredients can also be added to the above ingredients: chocolate mixture base enhancing the organoleptic structure-texture and flavor profile of the final product, corn starch, natural flavorings (enhancing the organoleptic flavor profile of the final product) and an acidity regulator which maintains the pH in the range of 5.2 - 5.7, giving the final product greater microbiological stability and safety.

In different embodiments, the hazelnut paste may be replaced by a paste of another type of nut or a mixture thereof, the glucose syrup by another sweetener (e.g. sucralose), and the chocolate may be chosen between dark or white, or a mixture of the two, or an imitation or substitute for chocolate or ganache. Hereinafter, unless otherwise specified, the term "chocolate" is used to denote white or dark chocolate, an imitation or substitute for chocolate or ganache, or a mixture thereof.

Chocolate typically contains at least two of the following ingredients: sugar, cocoa butter, cocoa, milk (in powder or liquid form), lecithin (soy or other origin) and cocoa-based or vanillin-based flavorings. Milk is an optional ingredient.

The innovation of the present solution, namely the sweet spread, lies in the excess water contained in the spread and which is combined with the hazelnut paste (and optionally with the chocolate base and starch). The result of this combination is, on the one hand, the adjustment of the Aw of the spread to 0.89-0.91 and, on the other hand, the imparting to the spread a smooth texture and a cohesive structure, which remains stable for a long time (e.g. 15-25 days), thus increasing the shelf life of the ready-made spread. The cohesive structure of the ready-made cream (spread) is the result of the emulsification that the water undergoes with the fatty phase contained in the spread. In the case that the spread also contains corn starch, this acts as a stabilizer which promotes the maintenance of the physicochemical state of the spread. During the production process, the aqueous solution is pasteurized at 85°C for approximately 3 minutes. In this case, the starch gelatinizes by binding quantities of water to its mass. This process contributes to increasing the viscosity and reducing the fluidity of the produced cream. This system significantly helps in mixing with the fatty phase of the chocolates through stirring. Furthermore, by applying a vacuum, emulsification of the mixture is achieved, achieving the union of the two phases in the absence of separations. In the absence of corn starch (or other starch), the mixing of the two phases would not be possible and the liquid phase would separate from the fatty phase immediately after mixing the corresponding raw materials or a short time thereafter. This separation would degrade the texture of the spread and facilitate the growth of mold and other pathogenic microorganisms, rendering the spread unsuitable for use or at least degrading its organoleptic characteristics to an extent that it would not be possible to sell and/or consume it.

Through the emulsification of the water and fat phase, which are contained in the spread, the Aw of the spread can be adjusted to 0.89-0.91 so that it is suitable for use in sandwich-type products with sweet spread. ready-to-use and suitable for storage outside refrigeration for a period of days or weeks. The compatibility of the spread with toast bread in ready-to-eat sweet spread sandwich products is also ensured due to its cohesive structure and smooth texture, characteristics that prevent the spread from penetrating the bread cells/blisters. In this way, the contact surface of the spread with the bread contact surface is reduced and consequently the exchange of free water from the bread to the spread is reduced (or at least slowed down) in the case where there are small differences between the Aw of the two phases. This ensures the nutritional safety and quality of the final product.

**Table 3: Nutritional characteristics of the present invention**

| **NUTRITIONAL VALUE** | **General Implementation** Example **(% wt.)** | **1° EXEMPLARY EMBODIMENT (% wt.)** |
|---|---|---|
| Energy | 380 - 420 kcal | 402 kcal |
| Fats | 25.0 - 30.0 | 26.0 |
| of which saturated | 10.0 -14.5 | 13.6 |
| Carbohydrates | 37 - 42 | 38 |
| Dietary fiber | 1.5 - 2.4 | 1.7 |
| Proteins | 4.4 - 5.5 | 5.0 |
| Salt | 0.2 - 0.6 | 0.4 |

The mixture of raw materials can be varied in the proportions of the above raw materials with the aim of achieving the nutritional characteristics of **Table 3,** General Example. It is known to those skilled in the art how, based on **Table 3,** General Example and 1st Embodiment Example, one or more sweet spread recipes according to the present invention can be created, using the aforementioned ingredients, without requiring experimentation beyond a usual routine of mixing known raw materials with known nutritional value each.

However, what is neither known nor obvious to the skilled person is the selection and combination of the above-mentioned minimally necessary raw materials or optional raw materials to solve the technical problem without knowledge of the information contained in

### Table 3.

The above values, percentages of ingredients in the mixture, etc. are examples of implementation of the present invention and are not intended to limit the scope of the intended protection. On the contrary, the novelty of the invention lies in the combination of the different raw materials in the sweet spread in order to obtain the desired properties in the spread produced and to solve the technical problems mentioned above. It is, therefore, possible for the person skilled in the art to use the aforementioned raw materials and mix them in order to produce a spread, using different proportions. In this case, which is also included in the scope of the intended protection, the produced spread will have the properties mentioned above, to a different extent from each other. However, since the presence of the raw materials in combination with each other gives the spread the desired properties, it is suitable for industrial production and use in sandwich-type products ready for consumption and suitable for preservation outside refrigeration for a long period of time without degradation of their quality, both in terms of their health characteristics and in terms of their organoleptic characteristics and how consumers understand them. Consequently, the modification of the aforementioned proportions, dimensions, etc. falls within the intended protection of the present invention and can be done by the person skilled in the art in order to adapt the spread to specific patterns of use and to produce specific products that meet specific specifications. As the present invention aims to protect all these products, which will have the aforementioned technical characteristics, the exemplary implementations are not limited to the specific presentation of a mixture of raw materials for specific products but for all products that have the technical characteristics mentioned above. On the contrary, the description of embodiments which can be used in the production of a spread suitable for use in potentially all sandwich-type products with filling, is desirable by the industry as it solves the problem of producing a wide range of different types of spreads, each for a different use. Otherwise, the production of a wide range of different types of spreads, each for a different use, could prove to be unfeasible due to the high cost of differentiation of production. At the same time, the differentiation of the technical characteristics between these different types of spreads would be so small that it would not give the different types of spreads any substantial and commercially exploitable advantage or differentiation. Therefore, the present description of the invention covers all possible modifications thereof as long as they use the materials and raw materials mentioned above.

**Table 4: 2nd, 3rd and 4th embodiment of the present invention**

| **Ingredients** | **2° Exemplary Implementation (% wt.)** | **3° Exemplary Implementation (% wt.)** | **4° Exemplary Implementation (% wt.)** |
|---|---|---|---|
| Chocolate (imitation, White) | 38 - 44 | - | - |
| Chocolate (Imitation, Milk) | - | 40 - 46 | 40 - 46 |
| Hazelnut Paste | 24-29 | 20 - 24 | - |
| Peanut/Pistachio Paste | - | - | 20 - 24 |
| Water | 24 | 26 | 26 |
| Glucose | 8-12 | 8-12 | 8-12 |
| Tara Gum | <= 0,5 | <= 0,5 | <= 0,5 |
| Sorbic acid | <= 0,2 | <= 0,2 | <= 0,2 |
| Salt and Hazelnut Flavor | <= 0,1 | <= 0,1 | - |
| Chlorophyll Coloring | - | - | <= 0,1 |

Table 4 presents the 2nd exemplary embodiment (hazelnut spread with imitation white chocolate), the 3rd exemplary embodiment (hazelnut spread with imitation milk chocolate) and the 4th exemplary embodiment (peanut spread with imitation milk chocolate) of the present invention.

**Table 4** presents the 2nd, 3rd and 4th exemplary embodiments of the present invention, in which the ingredients (raw materials) are used in the specific ratio ranges presented. The selection of the specific ratios for each of the ingredients in **Table 4** is made in order to achieve the nutritional value, which is presented in **Table 3,** General Embodiment. Having knowledge **of Table 3,** General Embodiment and **Table 4** it is obvious and does not require any experimentation or inventive activity from the person skilled in the art regarding which quantities of each ingredient of **Table 4** (can) be selected in order to achieve nutritional values within the limits indicated in **Table 3,** General Embodiment. This selection of ingredients (from **Table 4** based on **Table 3,** General Embodiment) will simultaneously ensure the desired properties in the present invention, in particular and among others the regulation of the water activity Aw and the other quality characteristics in the final bread product. Therefore, the inventiveness of the present invention lies in the content of **Tables 4** and **5.**

All weight ratios are approximate.

### Method for Preparing a Sweet Spread

The present invention also relates to a method for preparing a sweet spread with a modified Aw so that it is suitable for use with ready-to-eat sandwich products and increases their shelf life without refrigeration, while maintaining the quality of their organoleptic characteristics.

Step 1: Roasting dry nuts through a pre-selected temperature profile. The nuts (e.g. hazelnut, almond, etc.) are placed in the roasting bin of a roasting machine, selected from one of the machines known from the literature. According to the operating principle of the roasting machine, the nuts are roasted through a hot air cyclone. The application cycle is approximately 18' - 20', depending on the nuts to be roasted and the desired degree of roasting in order to create the desired flavor profile. The application temperature can either be constant or vary (from 130°C to 170°C) depending on the desired roasting profile. Preferably, a mild roasting profile is implemented at temperatures (140°C) on the final product. After the roasting step is completed, the roasted nuts are collected-removed from the roasting bin of the roasting machine.

In alternative exemplary implementations, roasting is done with other roasting techniques and machines known in the literature.

In other exemplary embodiments where instead of nuts, the spread contains other materials (e.g. fruit jam, vanilla cream, tahini or other), the 1st step (i.e. roasting) is omitted.

In an alternative embodiment where the spread includes nuts and other material, such as fruit jam, vanilla cream, tahini or other, the 1st step (roasting) is applied only to the nuts.

Step 2: Grinding the roasted nuts until a paste is created due to the fats they contain. The grinding is done by mechanically straining the roasted nuts through a stator.

The product produced in the form of a paste can be stored ready for use for the next step.

In alternative embodiments, the creation of roasted nut paste is done with other techniques and machines known in the literature.

Step 3: Preparation of a semi-finished chocolate base phase mixture (e.g. chocolate) and addition of roasted nut paste through a ball mill machine selected from ball mills known in the literature. According to the operating principle of the ball mill, the other materials of the semi-finished chocolate base phase mixture together with the nut paste are recirculated through a positive displacement pump for high viscosity fluids (e.g. greater than approximately 5000cP). Before the introduction of the pump, there is a tank filled with small beads with a diameter of 8 to 12mm where the mixture is also placed. Through the recirculation pump, the mixture is sucked through the beads and then introduced into the pump and depressed at the top of the beads, continuing the recirculation process. The entire system (vat & piping) is surrounded by a double-walled cover with an adjustable temperature of approximately 45 - 55°C. The mixture, passing through the beads, is "rubbed", significantly reducing the size of the grains it contains. It is indicated that the granulometry of the sugar starts from 600-700µm and ends up in the final sample having a granulometry of approximately 20µm. Overall, the entire produced mixture completes its cycle in approximately 60', at a temperature of approximately 50-55°C and acquires a granulometry of 20µm, thus having an extremely smooth and cohesive ganache-type structure.

In other alternative exemplary embodiments, different particle sizes (e.g. approximately 20-30µm or 30µm or 20µm) are selected for the produced mixture.

In alternative embodiments, the ball mill is replaced by other machines and techniques for reducing the particle size of the components of the mixture of semi-finished chocolate base phase and roasted nut paste.

The final preparation of the spread (cream) (i.e. the aqueous solution) follows, which is carried out in an autoclave heating-cooling and partial vacuum machine for moisture removal and/or pasteurization at a lower temperature in order not to damage the product and to maintain its texture and taste unchanged.

### Autoclave spread preparation machine (cream)

It includes a double-walled tank (which has double walls) where either steam at about 2 to 3 bar can be channelled through its inner walls to immediately heat the mixture, or a water-glycol solution at a temperature of about 30°C to cool the mixture when necessary. Inside there is a two-axis stirring system. The first axis, which is the central one, includes an array of three blades that has the ability to rotate-stir the produced cream at very high speed. The stirring speed range is from 50 - 3000rpm, allowing the operator to choose the appropriate stirring speeds that will homogenize the cream without disturbing it. The second shaft operates in conjunction with the first at a lower rotation-stirring speed (e.g. less than 50rpm) acting as a scraper to remove the cream from the walls and deposit it in the mass of the mixture.

Based on the operating principle of this machine, the operator can first place the required raw materials as a hydrated phase and through heat (and optional stirring) pasteurize it at approximately 85°C for 3'. Then, partially place the anhydrous fatty raw materials - (chocolate) and homogenize them through stirring - gentle heating and vacuum with the preexisting a phase. Finally, once it is determined that the final cream product is ready, the machine can expel the steam from its wall and replace it with a water-glycol solution, reducing the temperature of the cream to 25-30°C in a short time, ready for use. In summary, the autoclave machine has the ability to produce a cream that is homogenized in a short time, while its microbiological load is extremely low, as the aqueous phase has been pasteurized while the entire cream has been heated (heated).

In alternative exemplary implementation scenarios, other types of machines can be used instead of the ball mill. In this case, the mixing, pasteurization, vacuum and cooling steps are performed serially without the use of a ball mill.

Step 4: The raw materials except for the chocolate are added to the machine's tank and heated to approximately 85°C. The mixture remains at this temperature for approximately 3', so that the aqueous phase of the cream is pasteurized, providing microbiological stability to the (final) spread after the addition of the remaining phases (see step 5).

Step 5: The remaining anhydrous raw materials of the recipe are then optionally added, chocolate (dark and/or white). Stirring follows under partial vacuum (i.e. at a pressure lower than atmospheric, e.g. 0 mbar) until a visually smooth and cohesive structure is formed. Through the operation of the vacuum, the final product is emulsified, presenting the best possible mixing of the lipophilic phase (fats) with the hydrophilic phase (water).

Step 6: The spread is allowed to cool, on its own or using a heat exchanger or other technique/machine, to 25 - 30°C and stored in containers (preferably metal).

The spread is ready to use. The Aw of the spread is approximately 0.89-0.91 (preferably 0.90 +/-0.03).

Unlike other production methods and spread formulations, the present spread is stable (the aqueous phase does not separate from the fatty phase) and cohesive. This makes it innovative compared to other known spreads, which are extremely watery and thin, while approximately 48 hours after their preparation, the aqueous and fatty phases separate ("creaming"). The combination of the manufacturing method and the mixture of raw materials give the present ready-to-use and store spread microbiological safety and organoleptic superiority.

The organoleptic superiority is documented by organoleptic measurements through known Sensory Panel Techniques (e.g. triangle test, duo-trio test, paired comparison test), which typically use a group ideally consisting of 8-12 individuals who have been trained to use their senses to evaluate a specific product.

The examples used above to describe the present innovative solution should not be considered as limiting the scope of application of the present innovative solution. The present innovative solution can be applied to other scenarios and settings than those described in the examples presented above. This innovative solution should be considered applicable to any type of spread.

The average person with relevant knowledge of the prior art understands that the proportions of the raw materials, temperatures, (sub)pressures, times, etc. of the present invention, as presented in the implementation examples, can be modified without departing from the scope of application and the intended protection of the present invention.

The average person with relevant knowledge of the prior art understands that the shape, proportions and dimensions of the parts of the present invention, as presented in the implementation examples, can be modified without departing from the scope of application and the intended protection of the present invention.

The above descriptions of implementation examples are simplified and do not include parts or steps that are used in the implementation but do not form part of the present invention, are not necessary for understanding the invention and are obvious to an average person with relevant knowledge of the prior art relevant to the invention. In addition, variations of the exemplary embodiments are possible where, for example, certain elements of the exemplary embodiments may be rearranged, omitted and replaced with equivalents or new ones may be added, as well as, existing elements may be interconnected in a manner different from that described, provided that the different interconnection is compatible with the technical effect that the elements of the invention have, being technical features of the invention. Similarly, the modification of the shape and dimensions of the presented parts is considered to fall within the scope of protection of the present innovative solution to the extent that these modifications are obvious to persons skilled in the relevant art and to the extent that these modifications are equivalent to the exemplary embodiments presented or do not add tangible and unexpected or non-obvious improvements to the technical effect they offer. Thus, the present text is not intended to be limited to the embodiments of the invention presented but should be accorded the widest possible scope consistent with the principles and novel features it discloses.

Unless specifically stated otherwise, it is the intention of the inventor to give to the words and phrases used in the description of the invention and in the claims the ordinary and commonly accepted meanings ascribed to them by an average person having relevant knowledge of the state of the art to which the present invention relates.

The foregoing description of a preferred embodiment and the best mode of carrying out the invention known to the applicant at the time of filing the application has been presented and is intended for the purposes of illustration and description. It is not intended to be exhaustive or to limit the invention to the precise form disclosed, and many modifications and variations are possible in light of the above teachings. The basic exemplary embodiments were chosen and described to better explain the principles of the invention and its practical application and to enable others skilled in the art to better utilize the invention in various application scenarios and modes of use and with various modifications as are appropriate to the particular use contemplated. Therefore, it is intended that the invention is not limited to the specific details disclosed for the embodiment of the invention, but that the invention includes all that fall within the scope of the appended claims.

## Claims

1. A sweet spread of adjustable water activity (Aw) for use in ready-to-eat sandwich products with an unrefrigerated shelf life of at least 15-25 days, the spread comprising following raw materials:
sweetener;
water; and
nut paste;
wherein the water is included in emulsified form trapped in the sweetener in a proportion of about 20%-30% wt. water on net weight of the spread and wherein ratios of the spread's raw materials are selected for ensuring that the spread has an Aw of 0.89-0.91 and comprises nutrients of about, per 100gr, 380 - 420 kcal of energy. 25.0 - 30.0 gr fat, of which 10.0 - 14.5 gr is saturated fat, 37 - 42 gr carbohydrates, 1.5 - 2.4 gr dietary fibers, 4.4 - 5.5 gr protein, and 0.2 - 0.6 gr salt.

2. Sweet spread according to claim 1, wherein the spread comprises about, per 100gr, 402kcal of energy. 26.0gr fat, of which 13.6gr are saturated fat, 38gr carbohydrates, 1.7gr dietary fiber, 5.0gr protein, and 0.4gr of salt.

3. Sweet spread according to any of the preceding claims, the spread further comprising (a) white and/or dark chocolate, wherein the chocolate comprises at least two ingredients selected from sugar, cocoa butter, vegetable fat, cocoa, milk, soy lecithin or of other origin, and cocoa-based or vanillin-based flavorings, and/or (b) fruit or tahini.

4. Sweet spread according to claim 3, wherein the sweetener is sugar or glucose syrup and starch is corn starch.

5. Sweet spread according to claim 1, wherein the nut paste is hazelnut paste, the sweetener is glucose and the spread further comprises white chocolate imitation, Tara gum, sorbic acid, salt and Hazelnut flavor, and the raw materials are included in the following ratios:
white chocolate imitation about 38-44% wt.;
hazelnut paste about 24-29% wt.;
water about 24% wt.;
glucose about 8-12% wt.;
Tara gum about <= 0.5% wt.;
sorbic acid about <= 0.2% wt.; and
salt and hazelnut flavor about <= 0.10% wt.

6. Sweet spread according to claim 1, wherein the nut paste is hazelnut paste, the sweetener is glucose and the spread further comprises imitation milk chocolate, Tara gum, sorbic acid, salt and hazelnut flavor, and the raw materials are included in the following ratios:
milk chocolate imitation about 40-46% wt.;
hazelnut paste about 20-24% wt.;
water about 26% wt.;
glucose about 8-12% wt.;
Tara gum about <= 0.5% wt.;
sorbic acid about <= 0.2% wt.; and
salt and hazelnut flavor about <= 0.10% wt.

7. Sweet spread according to claim 1, wherein the nut paste is hazelnut paste, the sweetener is glucose and the spread further comprises imitation milk chocolate, Tara gum, sorbic acid, salt and Hazelnut flavor, and the raw materials are included in the following ratios:
milk chocolate imitation about 40-46% wt.;
peanut paste about 20-24% wt.;
water about 26% wt.;
glucose about 8-12% wt.;
Tara gum about <= 0.5% wt.;
sorbic acid about <= 0.2% wt.; and
chlorophyll color about <= 0.10% wt.

8. A sweet spread according to any of the preceding claims, wherein the spread has an Aw of 0.90 +/- 0.03.

9. A sweet spread according to any of the preceding claims, wherein the spread has a particle size of about 20-30µm.

10. A sweet spread according to any of the preceding claims, wherein the spread has a particle size of about 20µm.

11. A method for preparing a sweet spread according to any of the preceding claims, the method comprising the following steps:
roasting nuts at 140°C;
mechanically grinding the roasted nuts until a nut paste is formed;
pasteurizing aqueous solution at about 85°C for about 3min;
mixing the pasteurized aqueous solution with a mixture of chocolates and nut paste;
mechanically processing aqueous cream at a pressure lower than atmospheric until the nut paste is emulsified and a sweet spread with an optically smooth and cohesive structure is produced, due to the mixing of a lipophilic phase (fat) with a hydrophilic phase (water), where the sweet spread has a particle size of approximately 20-30µm and a water activity (Aw) of approximately 0.89-0.91; and
cooling the aqueous solution until it reaches a temperature of about 28°C.

12. A method for preparing a sweet spread according to claim 11, the method further comprising adding chocolate to the cooled nut paste before mechanically processing the nut paste at a pressure below atmospheric pressure;
wherein the mechanically processing of the nut paste at a pressure below atmospheric pressure further comprises mechanically processing the chocolate together with the nut paste; and
the sweet spread further comprises the chocolate in a particle size of about 20-30µm.

13. A method for preparing a sweet spread according to any of claims 11-12, wherein:
the steps of mechanically grinding the roasted nuts, pasteurizing the nut paste, cooling the pasteurized nut paste, and mechanically processing the nut paste, and optionally the chocolate, at a pressure lower than atmospheric pressure are carried out in an autoclaved ball mill; and
the nut paste, and optionally the chocolate, are stirred at a speed of 50-3000rpm in a ball mill bowl by a first shaft carrying an array of three blades, fed with the nut paste, and optionally the chocolate, by a second shaft which removes the nut paste, and optionally the chocolate, from the inner walls of the bowl at a speed lower than the rotation speed of the first shaft.

14. A method for preparing a sweet spread, according to any of claims 11-13, wherein the nuts are (i) fruit, or (ii) vanilla cream, or (iii) sesame, or (iv) hazelnut, or (v) pistachio, and the nut paste is (a) fruit puree-jam, or (b) vanilla cream, or (c) tahini, or (d) hazelnut paste, or (e) pistachio paste, wherein the water is included in emulsified form trapped in the sweetener in a proportion of approximately 30% wt. water on the net weight of the spread and where the proportions of the spread ingredients are selected for ensuring that the spread has an Aw of 0.89-0.91 and includes nutrients of about, per 100gr, 380 - 420 kcal of energy, 25.0 - 30.0 gr fat, of which 10.0 - 14.5 gr is saturated fat, 37 - 42 gr carbohydrates, 1.5 - 2.4 gr dietary fibers, 4.4 - 5.5 gr protein, and 0.2 - 0.6 gr salt.
